# EUROPEAN PATENT APPLICATION

(11) **EP 4 620 720 A1**
(43) Date of publication of application: **24.09.2025**
(21) Application number: 24164614.0
(22) Date of filing: 19.03.2024
(51) Int. Cl.: B60L 50/75, B60L 58/40

(54) **STATE OF CHARGE CONTROL FOR A FUEL CELL VEHICLE**

(71) Applicant: VOLVO TRUCK CORPORATION, 405 08 Göteborg (SE)
(72) Inventor: STJERNBERG, Oscar, 411 35 GÖTEBORG (SE); BASSO, Rafael, 415 28 GÖTEBORG (SE); WILHELMSSON, Martin, 423 39 TORSLANDA (SE); SUMAN, Saurabh, 417 47 GÖTEBORG (SE)
(74) Representative: Kransell & Wennborg KB

(57) **Abstract**

A computer system (100) comprising processing circuitry (102) configured to: simulate a power output profile for an upcoming route (116) for a vehicle (104), acquire cooling efficiency information (114) of a cooling system (112, calculating the power output available from the fuel cell system (108) without overloading the cooling system (112), determine a control strategy (132) for energy stored in the electrical energy storage system (110) from a present position (P1) to the end of the route (116), execute the control strategy (132), and update the simulation and the control strategy while the vehicle (104) is travelling the route.

## Description

### TECHNICAL FIELD

The disclosure relates generally to fuel cell vehicles. In particular aspects, the disclosure relates to state of charge control for a fuel cell vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In current fuel cell technologies utilized in vehicles, a significant portion of the energy input into the fuel cell is converted into thermal energy. Unlike traditional diesel engines, which operate at higher temperatures and expel a considerable amount of heat energy via exhaust, fuel cells function at lower temperatures and emit significantly less heat energy through their exhaust systems. Consequently, the cooling system of a fuel cell electric vehicle (FCEV) must dissipate a large amount of thermal energy to maintain the fuel cell at an optimal operating temperature. Should the cooling system extract excessive thermal energy, the fuel cell may be required to derate, that is, reduce its power output to prevent overheating. This necessity for enhanced cooling renders FCEVs particularly susceptible to challenges during high-power output operations under standard ambient temperature conditions.

### SUMMARY

According to a first aspect of the disclosure, there is provided a computer system comprising processing circuitry configured to: simulate a power output profile for an upcoming route for a vehicle propelled by an electric machine powered by a fuel cell system and an electrical energy storage system chargeable by the fuel cell system, acquire cooling efficiency information of a cooling system of the vehicle arranged to cool the fuel cell system, calculating, for an upcoming increase in power demand according to the power output profile, the power output available from the fuel cell system without overloading the cooling system according to the cooling efficiency information, determine a control strategy for energy stored in the electrical energy storage system from a present position to the end of the route, the control strategy comprises, for each upcoming increase in power demand, at least one time slot for charging the electrical energy storage system using the fuel cell system to a first energy level that ensures that the upcoming increase in power demand is met by the calculated power output available from the fuel cell system and the first energy level of the electrical energy storage system, execute the control strategy, and update the simulation and the control strategy while the vehicle is travelling the route.

The first aspect of the disclosure may seek to decrease the risk of derating the fuel cell system. That is, first aspect seeks to provide more efficient use of the fuel cell system in such a way that lowering the power output due to insufficient cooling is avoided.

Optionally in some examples, including in at least one preferred example, the upcoming increase in power may be determined to ensure that the vehicle speed can be substantially maintained throughout the road section corresponding to the upcoming increase in power. A technical benefit may include more uniform driving through the road section. Furthermore, the vehicle speed is a straight forwards parameter for the simulation of the power profile.

Optionally in some examples, including in at least one preferred example, the processing circuitry may be further configured to: acquire input data including a speed profile for the route, an altitude profile for the route, and vehicle characteristic data, simulate the power output profile based on the acquired input data. A technical benefit may include more accurate simulation of the power output profile since more input data is used.

Optionally in some examples, including in at least one preferred example, the input data further includes map that comprising weather input data. A technical benefit may include even further improved accuracy in the simulation of the power output profile due to that also weather conditions are considered in the simulation. Furthermore, using weather data as input allows for taking the ambient conditions into account thereby improving the control strategy further. It can be especially useful when the weather conditions change over the course of the planned route.

Optionally in some examples, including in at least one preferred example, the processing circuitry may be further configured to: transmit, via a wireless communication device, the control strategy to other vehicles on the same route. A technical benefit may include improved control strategies also based on historical data from other vehicles. Furthermore, in scenarios involving autonomous or semi-autonomous vehicles, sharing control strategies facilitates the optimization of the entire fleet's operation, allowing for more efficient route planning and energy management on a system-wide level. In addition, using data from other vehicles improves decision making in developing the control strategy.

Optionally in some examples, including in at least one preferred example, the processing circuitry may be further configured to: determine an upcoming time period during the route where the fuel cell system is in an idle state, and include, in the control strategy, time slots prior to the idle state for preparing the electrical energy storage device to be able to receive idle energy from the fuel cell system as charging energy. A technical benefit may include further improved control strategy that also considers idle states of the fuel cell system. Taking idle state time slots into account improves energy harvesting, thus preparing the electrical energy storage system (e.g., battery) to receive otherwise wasted energy, the system ensures that energy is harvested and stored rather than dissipated as heat or wasted. Using idle energy to charge the electrical energy storage system, the need for the fuel cell system to operate at higher power levels solely to charge the electrical energy storage system during periods of high demand is reduced.

Optionally in some examples, including in at least one preferred example, the processing circuitry is further configured to: prior to departure, providing data of a present energy level of the electrical energy storage system as input to the simulation. A technical benefit may include that input concerning energy level in the electrical energy storage system improves the accuracy of the simulation and control strategy. That is, the simulation gets information of the initial state of the electrical energy storage system.

Optionally in some examples, including in at least one preferred example, the processing circuitry may be further configured to: determine, from the simulation and prior to departure, a required energy level in the electrical energy storage system, and set a charge level of the electrical energy storage system to the required level during pre-departure charging. A technical benefit may include, in case of charging is available, the charge level may be adjusted to improve the accuracy of the control strategy further.

Optionally in some examples, including in at least one preferred example, the processing circuitry may be further configured to: evaluate the simulated power output profile in view of the control strategy, determine a measure of the outcome of the control strategy indicating the success rate of the control strategy, provide an output of the measure. A technical benefit may include that future simulations can be improved by evaluating the outcome of previous simulations. That is, a technical advantage of evaluating the control strategy's performance and providing a measure of its success rate may lay in enabling a feedback loop that supports continuous improvement, data-driven decision-making, and operational transparency.

Optionally in some examples, including in at least one preferred example, the processing circuitry may be further configured to: adapt simulation parameters based on the outputted measure. A technical benefit may include improved simulations and therefore also reduced risk of derating of the fuel cell system.

There is further provided a vehicle comprising the computer system.

According to a second aspect of the disclosure, there is provided a computer-implemented method, comprising: simulating, by processing circuitry of a computer system, a power output profile for an upcoming route for a vehicle propelled by an electric machine powered by a fuel cell system and an electrical energy storage system chargeable by the fuel cell system, acquiring, by the processing circuitry, cooling efficiency information of a cooling system of the vehicle arranged to cool the fuel cell system, calculating, by the processing circuitry, for an upcoming increase in power demand according to the power output profile, the power output available from the fuel cell system without overloading the cooling system according to the cooling efficiency information, determining, by the processing circuitry, a control strategy for energy stored in the electrical energy storage system from a present position to the end of the route, the control strategy comprises, for each upcoming increase in power demand, at least one time slot for charging the electrical energy storage system using the fuel cell system to an energy level that ensures that the upcoming increase in power demand is met by the fuel cell system and an electrical energy storage system, executing, by the processing circuitry, the control strategy, and updating, by the processing circuitry, the simulation and the control strategy while the vehicle is travelling the route. The second aspect of the disclosure may seek to decrease the risk of derating the fuel cell system. That is, second aspect seeks provides more efficient use of the fuel cell system in such a way that lowering the power output due to insufficient cooling is avoided.

Optionally in some examples, including in at least one preferred example, the upcoming increase in power is determined to ensure that the vehicle speed can be substantially maintained. A technical benefit may include more uniform driving through the road section. Furthermore, the vehicle speed is a straight forward parameter for the simulation of the power profile.

Optionally in some examples, including in at least one preferred example, the method may further comprise: acquiring, by the processing circuitry, input data including a speed profile for the route, an altitude profile for the route, and vehicle characteristic data, and simulating, by the processing circuitry, the power output profile based on the acquired input data. A technical benefit may include more accurate simulation of the power output profile since more input data is used.

Optionally in some examples, including in at least one preferred example, the method may further comprise: transmitting, by the processing circuitry, via a wireless communication device, the control strategy to other vehicles on the same route. A technical benefit may include improved control strategies also based on historical data from other vehicles.

Optionally in some examples, including in at least one preferred example, the method may further comprise: determining, by the processing circuitry, an upcoming time period during the route where the fuel cell system is in an idle state, and including, by the processing circuitry, in the control strategy, time slots prior to the idle state for preparing the electrical energy storage device to be able to receive idle energy from the fuel cell system as charging energy. A technical benefit may include further improved control strategy that also takes into account idle states of the fuel cell system.

Optionally in some examples, including in at least one preferred example, the method may further comprise: prior to departure, providing, by the processing circuitry, data of a present energy level of the electrical energy storage system as input to the simulation. A technical benefit may include that input concerning energy level in the electrical energy storage system improves the simulation and control strategy.

Optionally in some examples, including in at least one preferred example, the method may further comprise: determining, by the processing circuitry, from the simulation and prior to departure, a required energy level in the electrical energy storage system, and setting, by the processing circuitry, a charge level of the electrical energy storage system to the required level during pre-departure charging. A technical benefit may include, in case of charging is available, the charge level may be adjusted to improve the control strategy further.

Optionally in some examples, including in at least one preferred example, the method may further comprise: evaluating, by the processing circuitry, the simulated power output profile in view of the control strategy, determining, by the processing circuitry, a measure of the outcome of the control strategy indicating the success rate of the control strategy, providing, by the processing circuitry, an output of the measure. A technical benefit may include that future simulations can be improved by evaluating the outcome of previous simulations.

Optionally in some examples, including in at least one preferred example, the method may further comprise: adapting, by the processing circuitry, simulation parameters based on the outputted measure. A technical benefit may include improved simulations and therefore also reduced risk of derating of the fuel cell system.

There is further provided a computer program product comprising program code for performing, when executed by the processing circuitry, the method of the second aspect.

There is further provided a non-transitory computer-readable storage medium comprising instructions, which when executed by the processing circuitry, cause the processing circuitry to perform the method of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a computer system according to an example.
**FIG. 2A** is a set of graphs illustrating power output of a fuel cell system, SoC of a battery, and other parameters according to prior art solutions.
**FIG. 2B** is a set of graphs to describe a planned route, fuel cell system output power, and the state of charge, SoC of the electrical energy storage system, according to an example.
**FIG. 3** is a flow chart of an exemplary method for predictively reducing the risk of derating a fuel cell system according to an example.
**FIG. 4** is a truck according to an example vehicle.
**FIG. 5** is another view of **FIG. 1**, according to an example.
**FIG. 6** is a flow chart of an exemplary method for predictively reducing the risk of derating a fuel cell system according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Fuel cells operate at a relatively low temperature and output only a small amount of heat through their exhaust. This places a high demand on the cooling system of the fuel cells. If the cooling system exceeds its capability, the fuel cell must reduce (derate) its power output to avoid overheating. The examples disclosed here predictably decrease the risk of derating by simulating the power needs for a driving cycle of a fuel cell electric vehicle before departure. The output of the simulation is used to adjust and control the stored energy in the onboard electrical energy storage system of the vehicle, ensuring the vehicle can meet upcoming power need. Additionally, the prediction of power output can be performed while the vehicle is driving the cycle to ensure the latest and most precis prediction of future need of power output. This prediction can be run either onboard or offboard and communicated to the vehicle.

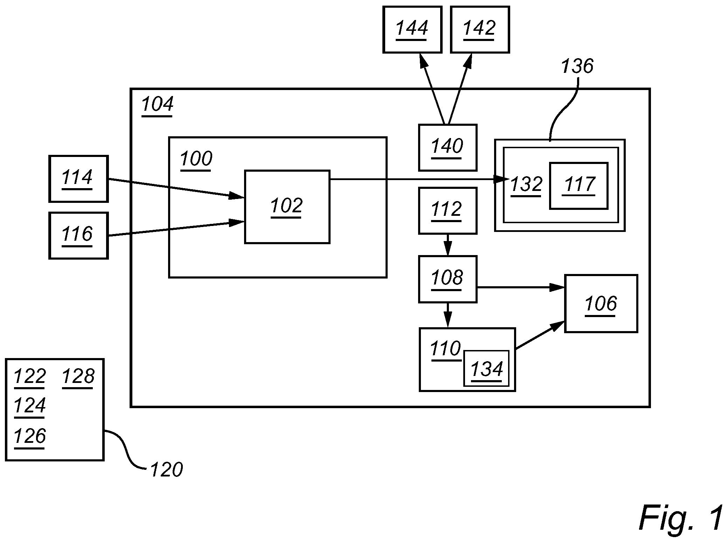

**FIG. 1** is an exemplary system diagram of a computer system 100 for predictively reducing the risk of derating a fuel cell system according to an example comprising a processing circuitry 102.

In this example, the computer system 100 is comprised in a vehicle 104 propelled by an electric machine 106 powered by a fuel cell system 108 and an electrical energy storage system 110 rechargeable by the fuel cell system 108.

A cooling system 112 is configured to cool the fuel cell system 108. The cooling system 112 may be a liquid cooling system. The cooling system 112 is associated with a cooling efficiency.

The processing circuitry 102 is configured to acquire cooling efficiency information 114 concerning the efficiency of the cooling system 108 and information concerning an upcoming route 116. The upcoming route 116 information may be acquired from a database of known scheduled routes for the vehicle, or the route 116 may be predicted based on historical routes travelled at given times.

The processing circuitry 102 is configured to simulate a power output profile for an upcoming route 116 for a vehicle 104 propelled by an electric machine 108 powered by a fuel cell system 110 and an electrical energy storage system 112 chargeable by the fuel cell system 108. The power output profile provides the power required at different locations along the upcoming route. The processing circuitry 102 may acquire input data 120 including a speed profile 122 for the route, an altitude profile 124 for the route, and vehicle characteristic data 126, and simulate the power output profile based on the acquired input data 120. The vehicle characteristic data includes for example rolling resistance and air drag coefficients.

In addition, the input data 120 may further include a map 128 comprising weather input data. That is, to provide an accurate simulation of the power output profile, the processing circuitry 102 may take, as input, the speed profile 122 for the route, an altitude profile 124 for the route, vehicle characteristic data 126, and weather data 128.

The processing circuitry 102 simulates the power needed at different instances along the route, by modelling the core essential parts of the vehicle that contributes to power consumption, such as the complete drivetrain, auxiliary loads and PTO (Power Take Off). Parameters such as the total weight of the vehicle, aerodynamic drag coefficient and the trucks rolling resistance are preferably considered as well. This vehicle model is then used to calculate the power consumption for the road/route topography and speed.

The processing circuitry further acquires the cooling efficiency information 114 of the cooling system 112 of the vehicle arranged to cool the fuel cell system 108. The cooling efficiency information 114 may be the maximum cooling efficiency of the cooling system 112.

The processing circuitry 102 calculates, for an upcoming increase in power demand 130 according to the power output profile, the power output available from the fuel cell system without overloading the cooling system according to the cooling efficiency information. That is, the power output available is that maximum power which does not produce more heat than the maximum cooling efficiency of the cooling system can provide.

The upcoming increase in power may be for climbing a hill and may be determined so that the upcoming increase in power is determined to ensure that the vehicle speed can be substantially maintained throughout the road section corresponding to the upcoming increase in power. That is, the hill can be climbed at a speed which the fuel cell power can maintain throughout the climb.

The processing circuitry 102 determines a control strategy 132 for energy stored in the electrical energy storage system from a present position to the end of the route 116. The control strategy 132 comprises, for each upcoming increase in power demand 130, at least one time slot 117 for charging the electrical energy storage system 110 using the fuel cell system 108 to a first energy level 134 that ensures that the upcoming increase in power demand 130 is met by the calculated power output available from the fuel cell system and the first energy level of the electrical energy storage system 110.

The processing circuitry 102 executes the control strategy 132 in a vehicle control system 136. Furthermore, the processing circuitry 102 updates the simulation and the control strategy 132 while the vehicle 104 is travelling the route 116. In other words, the simulation and control strategy 132 is continuously adapted to the present ambient conditions of the vehicle 104.

The vehicle 104 comprises a wireless communication device 140 configured to provide communication capabilities with a remote server 142 and/or other vehicles 144. The wireless communication device 140 may be configured for any type of wireless communication technology suitable such as Wifi, mobile networks, radio communications etc. The processing circuitry 102 may transmit, using the wireless communication device 104, the control strategy 132 to other vehicles 144 on the same route 116.

In some situations, the fuel cells of the fuel cell system are in an idle state. For example, when no traction power is needed, which may be the case when travelling in a down slope the fuel cell system may be set to an idle state. However, even in the idle state, the fuel cell system output some power, in the range of 20-60 kW. This power is preferably absorbed by the electrical energy storage system 110. Idle states of the fuel cell system 108 may be included in the control strategy which improves the energy harvesting efficiency of the system. The processing circuitry may be further configured to determine an upcoming time period during the route where the fuel cell system is in an idle state. For example, the time periods may be when travelling in a downhill which information may be extracted from the route data 116. The processing circuitry 102 includes, in the control strategy, time slots prior to the idle state for preparing the electrical energy storage system 110 to be able to receive idle energy from the fuel cell system as charging energy. In other words, as the vehicle executes the control strategy and approaches an idle state time slot, the electrical energy storage system is discharged, preferably through providing traction power, such that it can receive, and be charged by the power from the fuel cell system 108 during its idle state.

To initiate the simulation and to provide initial input, the processing circuitry 102 provides, prior to departure, data of a present energy level of the electrical energy storage system 110. In situations where charging of the electrical energy storage system 110 is available, the processing circuitry 102 may determine, from the simulation and prior to departure, a required energy level in the electrical energy storage system 110. The required energy level, such as state of charge, SoC, may be set so that excess energy can be absorbed from the fuel cell system 108 and/or regenerative braking, especially during early occurring events requiring absorption of energy. The processing circuitry 102 sets a charge level of the electrical energy storage system 110 to the required level during pre-departure charging.

The simulation and consequently also the control strategy may be improved over time. For this, the outcome of the simulation can be evaluated in view of the executed control strategy to determine if there was any risk of overloading the cooling system 112 and derating the fuel cell system 108 and the vehicle 104 lose speed. The processing circuitry 102 may thus evaluate the simulated power output profile in view of the control strategy. The processing circuitry 102 determines a measure of the outcome of the control strategy indicating the success rate of the control strategy and provides an output of the measure. The measure may be the number of occasions where derating was at risk, or where it actually occurred. No derating occasions is the aim of the control strategy and the highest success.

The processing circuitry 102 may adapt simulation parameters based on the outputted measure. For example, the power split between fuel cell system 108 and electrical energy storage system 110, the so-called equivalence factor, may be varied, the rolling resistance of the vehicle may be adjusted, the cooling efficiency may be updated, or vehicle control parameters such as speed at cruise control.

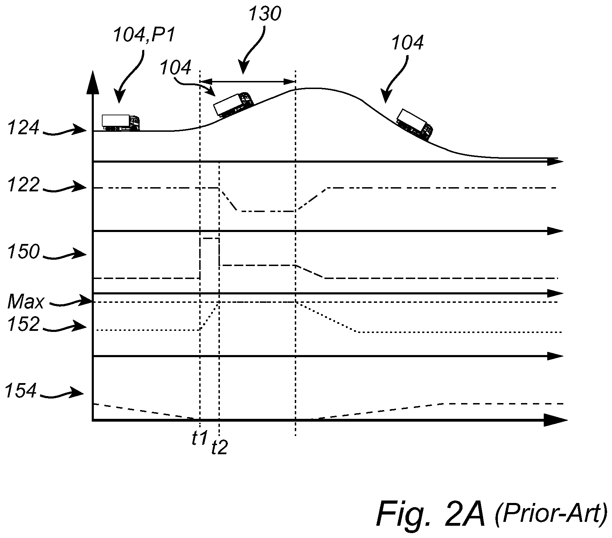

FIG. 2A-B are each a set of graphs to describe a planned route, fuel cell output power, and the state of charge, SoC of the electrical energy storage system 110. The top graph 124 is the altitude profile 124 for the planned route which to some extent reflect the power need, the second graph 122 is a speed profile 122 for the vehicle 104, the third graph 150 is the fuel cell power output for the fuel cell system of the vehicle 104, the fourth graph 152 is the cooling system temperature also indicating a maximum allowed temperature, and the bottom graph 154 is the SoC of the electrical energy storage system 110.

**FIG. 2A** illustrates the graphs for a prior art system without an efficient control strategy for the SoC 154 of the battery. The SoC of the battery is very low when the vehicle 104 reaches an area 130, uphill in this case, where high power is demanded at time t1. Since the SoC is very low at the time t1 when the high-power demand area 130 is reached, the fuel cell system has to deliver all the power needed to climb the hill 130, and the power output 150 from the fuel cell system increases rapidly at time t1. This causes the cooling system temperature 152 to increase rapidly and eventually reach the maximum allowed temperature at time t2. This is especially prominent in high ambient temperatures. Since the cooling system cannot keep up, the fuel cell system has to derate, i.e., reduce its power output at time t2 which also causes a reduction in speed 122. In other words, the vehicle 104 will have to drive slowly up the hill, reflected in the decreased speed 122 after time t2 when the fuel cell system has reduced its power output.

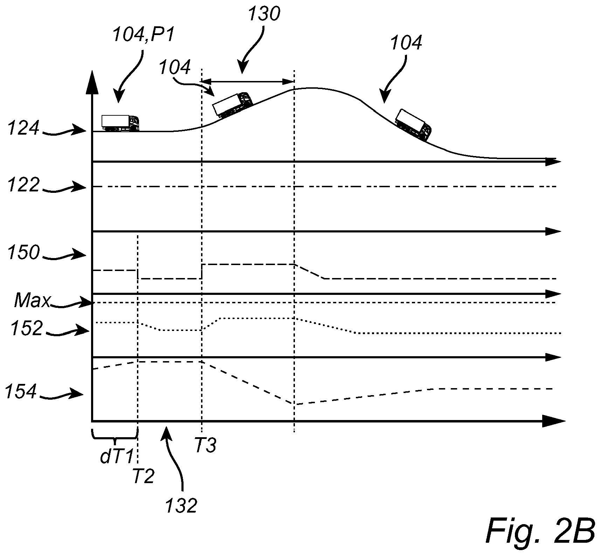

**FIG. 2B** illustrates the graphs 122, 124, 150, 152, 154 but when the herein described methods are used. Due to the simulated power output profile, the computer system is aware of the upcoming high-power demand 130. The computer system 100 can calculate, for the upcoming high-power demand 130 how much power the fuel cell system 108 can provide without overloading the cooling system. The control strategy for SoC 154 of the electrical energy storage system 110 that is prepared includes a time slot dT1 where the fuel cell system 108 increases its power output 150 in preparation for the high-power demand 130. This charges the electrical energy storage system 110 to a higher SoC, during time slot T1. Before reaching the high-power demand area 130, the power output from the fuel cell system 108 is reduced, at time here indicated as time T2, to allow recovery for the cooling system 112 prior to reaching the high-power demand area 130. That is, the temperature of the cooling system reduces at time T2.

Once the vehicle 104 reaches the high-power demand area 130, at time T3, the power output 150 of the fuel cell system increases but requires assistance from the electrical energy storage system 110 which SoC 154 consequently starts to decrease. The cooling system temperature 152 increases at T3 since the fuel cell system increases its power output 150. However, since the fuel cell system 108 is assisted by the electrical energy storage system 110 to propel the vehicle 104 up the hill 130, through the high power demand area 130, the cooling system will not overheat and no derating of the fuel cell system output power 150 is necessary. The speed 122 can be maintained throughout the high-power demand area 130.

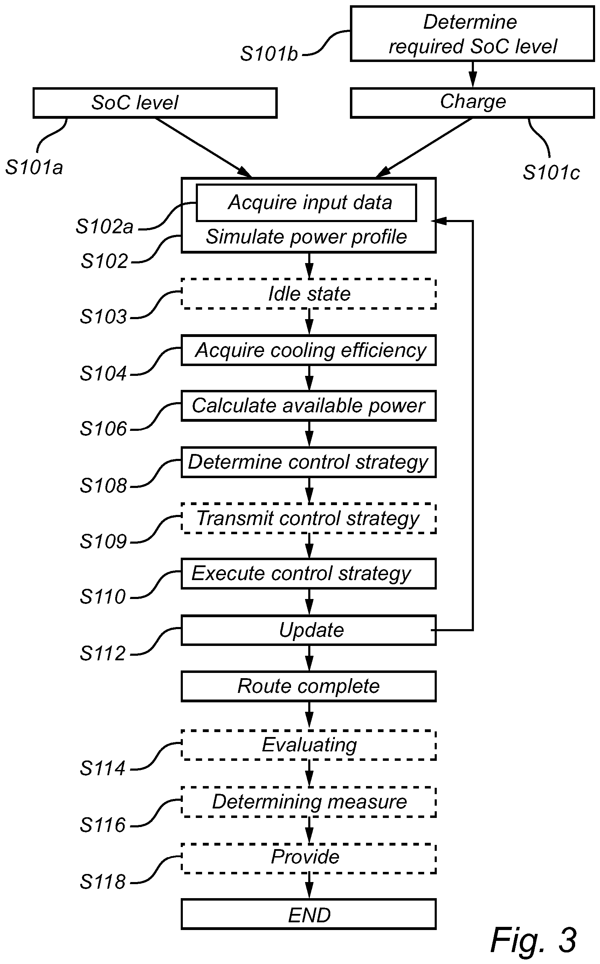

**FIG. 3** is a flow chart of a method for predictively reducing the risk of derating a fuel cell system according to an example.

In step S102, simulating, by processing circuitry 102 of a computer system 100, a power output profile for an upcoming route 116 for a vehicle propelled by an electric machine 106 powered by a fuel cell system 108 and an electrical energy storage system 110 chargeable by the fuel cell system 108.

In step S104 acquiring, by the processing circuitry 102, cooling efficiency information of a cooling system of the vehicle arranged to cool the fuel cell system.

In step S106, calculating, by the processing circuitry 102, for an upcoming increase in power demand 130 according to the power output profile, the power output available from the fuel cell system without overloading the cooling system according to the cooling efficiency information.

In step S108, determining, by the processing circuitry 102, a control strategy 132 for energy stored in the electrical energy storage system from a present position to the end of the route, the control strategy comprises, for each upcoming increase in power demand, at least one time slot for charging the electrical energy storage system using the fuel cell system to an energy level that ensures that the upcoming increase in power demand is met by the fuel cell system and an electrical energy storage system. The upcoming increase in power may for example be determined to ensure that the vehicle speed can be substantially maintained throughout the increase in power demand.

In step S110, executing, by the processing circuitry 102, the control strategy.

In step S112 updating, by the processing circuitry 102, the simulation and the control strategy while the vehicle 104 is travelling the route. In other words, with some repetition rate, the method starts over at step S102, unless it is ended for example by the vehicle being turned off. The method is preferably continuously performed or updated. In possible implementations the update can be performed at set intervals, or when a deviation from an initial route plan is detected.

To improve the simulation, the method may optionally include a step S102a, as part of the simulation, of acquiring, by the processing circuitry 102, input data including a speed profile 122 for the route 116, an altitude profile 124 for the route 114, and vehicle characteristic data 124 such as rolling resistance and air drag coefficients. The simulation of the power output profile is performed further based on this acquired input data.

In some examples, the method includes an optional step S109 of transmitting, by the processing circuitry 102, via a wireless communication device, the control strategy to other vehicles on the same route. In this way, the other vehicles may improve their strategies prior to reaching the high-power demand areas.

In some examples, the charge level in the electrical energy storage is either read a as input in step S101a, or in other examples where a charger is available, determining in step S101b, by the processing circuitry 102, from the simulation and prior to departure, a required energy level in the electrical energy storage system 110, and in step S101c setting, by the processing circuitry 102, a charge level of the electrical energy storage system 110 to the required level during pre-departure charging.

Subsequent to a completed route an evaluation of the control strategy may be performed. In optional step S 114 evaluating, by the processing circuitry 102, the simulated power output profile in view of the control strategy, and determining in optional step S116, by the processing circuitry 102, a measure of the outcome of the control strategy indicating the success rate of the control strategy. The output of the measure may be provided in optional step S118, and may be used for, in optional step S120 adapting, by the processing circuitry, simulation parameters based on the outputted measure.

In examples, an idle state of the fuel cell system is taken into account. In optional step S103, determining, by the processing circuitry 102, an upcoming time period during the route where the fuel cell is in an idle state, and including, by the processing circuitry, in the control strategy, time slots prior to the idle state for preparing the electrical energy storage device to be able to receive idle energy from the fuel cell system as charging energy.

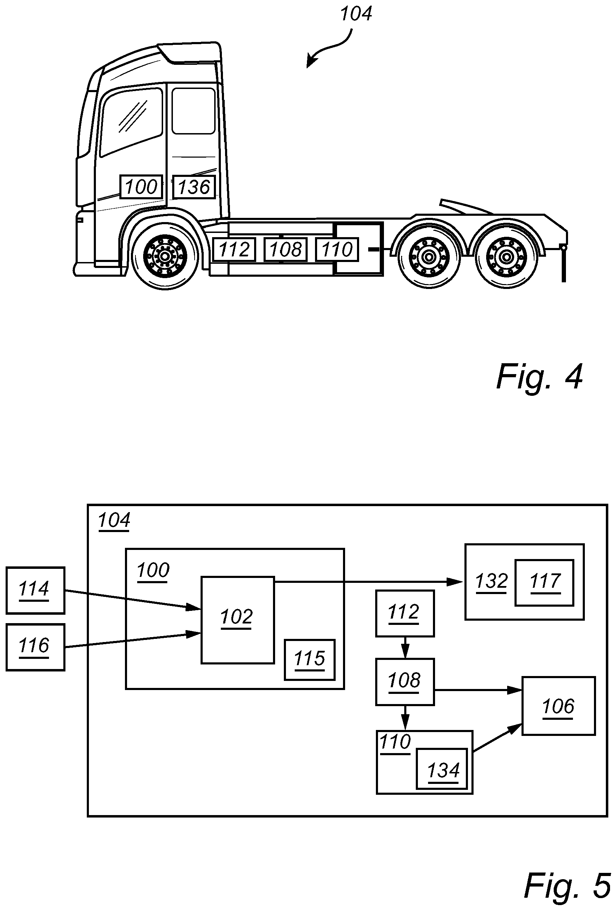

**FIG. 4** is a truck according to an example vehicle 104. The truck 104 comprises the computer system 100, a fuel cell system 108, an electrical energy storage system 112 rechargeable by the fuel cell system 108, a cooling system for cooling the fuel cell system 108, and a vehicle control system 136 used for executing the control strategy. The vehicle control system may receive instructions from the processing circuitry 102 for executing the control strategy.

It should be noted that the present disclosure is applicable to any of the present fuel cell technologies available. Fuel cells are known *per se* to the skilled person.

**FIG. 5** is another view of FIG. 1, according to an example. Fig 5 is a system diagram of a computer system 100 comprising processing circuitry 102 configured to: simulate a power output profile 115 for an upcoming route 116 for a vehicle 104 propelled by an electric machine 106 powered by a fuel cell system 108 and an electrical energy storage system 110 chargeable by the fuel cell system 108, acquire cooling efficiency information 114 of a cooling system 112 of the vehicle arranged to cool the fuel cell system 108, calculating, for an upcoming increase in power demand according to the power output profile 115, the power output available from the fuel cell system 108 without overloading the cooling system 112 according to the cooling efficiency information, determine a control strategy 132 for energy stored in the electrical energy storage system from a present position to the end of the route 116, the control strategy comprises, for each upcoming increase in power demand, at least one time slot 117 for charging the electrical energy storage system 110 using the fuel cell system 108 to a first energy level that ensures that the upcoming increase in power demand is met by the calculated power output available from the fuel cell system 108 and the first energy level 134 of the electrical energy storage system 110, execute the control strategy 132, and update the simulation 115 and the control strategy 132 while the vehicle is travelling the route 116.

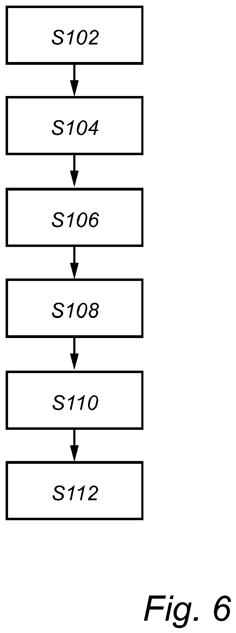

**FIG. 6** is a flow chart of a method for predictively reducing the risk of derating a fuel cell system according to an example.

In step S102, simulating, by processing circuitry of a computer system, a power output profile for an upcoming route for a vehicle propelled by an electric machine powered by a fuel cell system and an electrical energy storage system chargeable by the fuel cell system.

In step S104, acquiring, by the processing circuitry, cooling efficiency information of a cooling system of the vehicle arranged to cool the fuel cell system.

In step S 106, calculating, by the processing circuitry, for an upcoming increase in power demand according to the power output profile, the power output available from the fuel cell system without overloading the cooling system according to the cooling efficiency information.

In step S108, determining, by the processing circuitry, a control strategy for energy stored in the electrical energy storage system from a present position to the end of the route, the control strategy comprises, for each upcoming increase in power demand, at least one time slot for charging the electrical energy storage system using the fuel cell system to an energy level that ensures that the upcoming increase in power demand is met by the fuel cell system and an electrical energy storage system.

In step S 110, executing, by the processing circuitry, the control strategy.

In step S 112 updating, by the processing circuitry, the simulation and the control strategy while the vehicle is travelling the route.

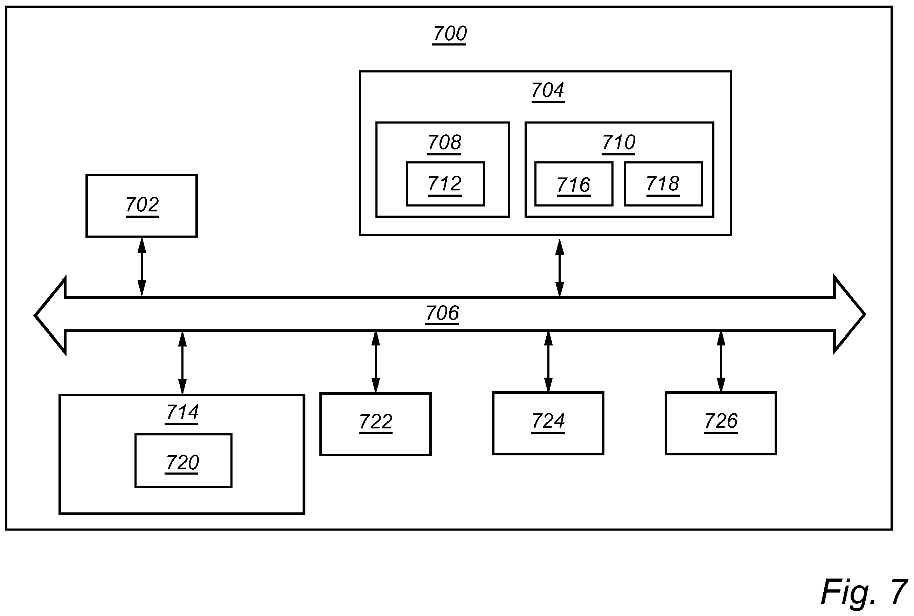

**FIG.** 7 is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704**, and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: simulate a power output profile for an upcoming route for a vehicle propelled by an electric machine powered by a fuel cell system and an electrical energy storage system chargeable by the fuel cell system, acquire cooling efficiency information of a cooling system of the vehicle arranged to cool the fuel cell system, calculating, for an upcoming increase in power demand according to the power output profile, the power output available from the fuel cell system without overloading the cooling system according to the cooling efficiency information, determine a control strategy for energy stored in the electrical energy storage system from a present position to the end of the route, the control strategy comprises, for each upcoming increase in power demand, at least one time slot for charging the electrical energy storage system using the fuel cell system to a first energy level that ensures that the upcoming increase in power demand is met by the calculated power output available from the fuel cell system and the first energy level of the electrical energy storage system, execute the control strategy, and update the simulation and the control strategy while the vehicle is travelling the route.

Example 2: The computer system of example 1, wherein the upcoming increase in power is determined to ensure that the vehicle speed can be substantially maintained throughout the road section corresponding to the upcoming increase in power.

Example 3: The computer system of any of examples 1-2, wherein the processing circuitry is further configured to: acquire input data including a speed profile for the route, an altitude profile for the route, and vehicle characteristic data, simulate the power output profile based on the acquired input data.

Example 4: The computer system of example 3, wherein the input data further includes map that comprising weather input data.

Example 5: The computer system of any of examples 1-3, wherein the processing circuitry is further configured to: transmit, via a wireless communication device, the control strategy to other vehicles on the same route.

Example 6: The computer system of any of examples 1-5, wherein the processing circuitry is further configured to: determine an upcoming time period during the route where the fuel cell system is in an idle state, and include, in the control strategy, time slots prior to the idle state for preparing the electrical energy storage device to be able to receive idle energy from the fuel cell system as charging energy.

Example 7: The computer system of any of examples 1-5, wherein the processing circuitry is further configured to: prior to departure, providing data of a present energy level of the electrical energy storage system as input to the simulation.

Example 8: The computer system of any of examples 1-6, wherein the processing circuitry is further configured to: determine, from the simulation and prior to departure, a required energy level in the electrical energy storage system, and set a charge level of the electrical energy storage system to the required level during pre-departure charging.

Example 9: The computer system of any of examples 1-8, wherein the processing circuitry is further configured to: evaluate the simulated power output profile in view of the control strategy, determine a measure of the outcome of the control strategy indicating the success rate of the control strategy, provide an output of the measure.

Example 10: The computer system of example 9, wherein the processing circuitry is further configured to: adapt simulation parameters based on the outputted measure.

Example 11: A vehicle comprising the computer system of any of examples 1-10.

Example 12: A computer-implemented method, comprising: simulating, by processing circuitry of a computer system, a power output profile for an upcoming route for a vehicle propelled by an electric machine powered by a fuel cell system and an electrical energy storage system chargeable by the fuel cell system, acquiring, by the processing circuitry, cooling efficiency information of a cooling system of the vehicle arranged to cool the fuel cell system, calculating, by the processing circuitry, for an upcoming increase in power demand according to the power output profile, the power output available from the fuel cell system without overloading the cooling system according to the cooling efficiency information, determining, by the processing circuitry, a control strategy for energy stored in the electrical energy storage system from a present position to the end of the route, the control strategy comprises, for each upcoming increase in power demand, at least one time slot for charging the electrical energy storage system using the fuel cell system to an energy level that ensures that the upcoming increase in power demand is met by the fuel cell system and an electrical energy storage system, executing, by the processing circuitry, the control strategy, and updating, by the processing circuitry, the simulation and the control strategy while the vehicle is travelling the route.

Example 13: The method of example 12, wherein the upcoming increase in power is determined to ensure that the vehicle speed can be substantially maintained.

Example 14: The method of any of examples 12-13, further comprising: acquiring, by the processing circuitry, input data including a speed profile for the route, an altitude profile for the route, and vehicle characteristic data, and simulating, by the processing circuitry, the power output profile based on the acquired input data.

Example 15: The method of any of examples 12-14, further comprising: transmitting, by the processing circuitry, via a wireless communication device, the control strategy to other vehicles on the same route.

Example 16: The method of any of examples 12-15, further comprising: determining, by the processing circuitry, an upcoming time period during the route where the fuel cell system is in an idle state, and including, by the processing circuitry, in the control strategy, time slots prior to the idle state for preparing the electrical energy storage device to be able to receive idle energy from the fuel cell system as charging energy.

Example 17: The method of any of examples 12-16, further comprising: prior to departure, providing, by the processing circuitry, data of a present energy level of the electrical energy storage system as input to the simulation.

Example 18: The method of any of examples 12-17, further comprising: determining, by the processing circuitry, from the simulation and prior to departure, a required energy level in the electrical energy storage system, and setting, by the processing circuitry, a charge level of the electrical energy storage system to the required level during pre-departure charging.

Example 19: The method of any of examples 12-18, further comprising: evaluating, by the processing circuitry, the simulated power output profile in view of the control strategy, determining, by the processing circuitry, a measure of the outcome of the control strategy indicating the success rate of the control strategy, providing, by the processing circuitry, an output of the measure.

Example 20: The method of example 19, further comprising: adapting, by the processing circuitry, simulation parameters based on the outputted measure.

Example 21: A computer program product comprising program code for performing, when executed by the processing circuitry, the method of any of examples 12-20.

Example 22: A non-transitory computer-readable storage medium comprising instructions, which when executed by the processing circuitry, cause the processing circuitry to perform the method of any of examples 12-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
simulate a power output profile for an upcoming route (116) for a vehicle (104) propelled by an electric machine (106) powered by a fuel cell system (108) and an electrical energy storage system chargeable by the fuel cell system,
acquire cooling efficiency information (114) of a cooling system (112) of the vehicle arranged to cool the fuel cell system (108),
calculating, for an upcoming increase in power demand according to the power output profile (115), the power output available from the fuel cell system (108) without overloading the cooling system (112) according to the cooling efficiency information (114),
determine a control strategy (132) for energy stored in the electrical energy storage system (110) from a present position (P1) to the end of the route (116), the control strategy (132) comprises, for each upcoming increase in power demand, at least one time slot (117) for charging the electrical energy storage system (110) using the fuel cell system (108) to a first energy level that ensures that the upcoming increase in power demand is met by the calculated power output available from the fuel cell system (108) and the first energy level of the electrical energy storage system,
execute the control strategy (132), and
update the simulation and the control strategy while the vehicle (104) is travelling the route.

2. The computer system of claim 1, wherein the upcoming increase in power (130) is determined to ensure that the vehicle speed (122) can be substantially maintained throughout the road section corresponding to the upcoming increase in power.

3. The computer system of any of claims 1-2, wherein the processing circuitry is further configured to:
acquire input data (120) including a speed profile (122) for the route (116), an altitude profile (124) for the route, and vehicle characteristic data (126),
simulate the power output profile based on the acquired input data.

4. The computer system of claim 3, wherein the input data further includes map that comprising weather input data (128).

5. The computer system of any of claims 1-3, wherein the processing circuitry is further configured to:
transmit, via a wireless communication device (140), the control strategy to other vehicles on the same route.

6. The computer system of any of claims 1-5, wherein the processing circuitry is further configured to:
determine an upcoming time period during the route where the fuel cell system is in an idle state, and
include, in the control strategy, time slots prior to the idle state for preparing the electrical energy storage device to be able to receive idle energy from the fuel cell system as charging energy.

7. The computer system of any of claims 1-6, wherein the processing circuitry is further configured to:
prior to departure, providing data of a present energy level of the electrical energy storage system as input to the simulation.

8. The computer system of any of claims 1-7, wherein the processing circuitry is further configured to:
determine, from the simulation and prior to departure, a required energy level in the electrical energy storage system, and
set a charge level (134) of the electrical energy storage system to the required level during pre-departure charging.

9. The computer system of any of claims 1-8, wherein the processing circuitry is further configured to:
evaluate the simulated power output profile in view of the control strategy,
determine a measure of the outcome of the control strategy indicating the success rate of the control strategy,
provide an output of the measure.

10. The computer system of claim 9, wherein the processing circuitry is further configured to:
adapt simulation parameters based on the outputted measure.

11. A vehicle (104) comprising the computer system (100) of any of claims 1-10.

12. A computer-implemented method, comprising:
simulating (S102), by processing circuitry of a computer system, a power output profile for an upcoming route for a vehicle propelled by an electric machine powered by a fuel cell system and an electrical energy storage system chargeable by the fuel cell system,
acquiring (S104), by the processing circuitry, cooling efficiency information of a cooling system of the vehicle arranged to cool the fuel cell system,
calculating (S106), by the processing circuitry, for an upcoming increase in power demand according to the power output profile, the power output available from the fuel cell system without overloading the cooling system according to the cooling efficiency information,
determining (S108), by the processing circuitry, a control strategy for energy stored in the electrical energy storage system from a present position to the end of the route, the control strategy comprises, for each upcoming increase in power demand, at least one time slot for charging the electrical energy storage system using the fuel cell system to an energy level that ensures that the upcoming increase in power demand is met by the fuel cell system and an electrical energy storage system,
executing (S110), by the processing circuitry, the control strategy, and
updating (S112), by the processing circuitry, the simulation and the control strategy while the vehicle is travelling the route.

13. The method of claim 12, wherein the upcoming increase in power is determined to ensure that the vehicle speed can be substantially maintained.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
